# EUROPÄISCHE PATENTSCHRIFT

(11) **EP 2 799 805 B1**
(45) Veröffentlichungstag und Bekanntmachung des Hinweises auf die Patenterteilung: **21.10.2015**
(21) Anmeldenummer: 14164768.5
(22) Anmeldetag: 15.04.2014
(51) Int. Cl.: F28F 13/00, B22F 3/11, B22F 5/10, F01N 5/02, F01K 23/06, F22B 1/18, F28F 13/18, F28D 7/10, F28D 15/04, F28D 21/00, F28F 1/12

(54) **Verdampferrohr zur Anordnung in einem Abgasstrang sowie Verfahren zur Herstellung des Verdampferrohres mit poröser Sinterstruktur und Dampfkanälen**
Vaporiser pipe for assembly in an exhaust line and method for producing the vaporiser pipe with porous sinter structure and vapour channels
Tube d'évaporateur à disposer dans un système d'échappement et procédé de fabrication du tube d'évaporateur doté d'une structure frittée poreuse et de canaux de vapeur

(30) Priorität: 16.04.2013 DE 102013103840
(43) Veröffentlichungstag der Anmeldung: 05.11.2014
(73) Patentinhaber: Benteler Automobiltechnik GmbH, 33102 Paderborn (DE)
(72) Erfinder: Rubitschek, Felix, 33104 Paderborn (DE); Düpmeier, Tobias, 33102 Paderborn (DE); Reul, Benjamin, 33102 Paderborn (DE); Grewe, Dimitra, 33098 Paderborn (DE)
(74) Vertreter: Griepenstroh, Jörg

(56) Entgegenhaltungen:
- DE-A1-102011 103 110
- US-A1- 2006 213 061
- US-A1- 2007 228 116
- US-A1- 2010 319 895

## Beschreibung

Die vorliegende Erfindung betrifft ein Verdampferrohr zur Anordnung in einem Abgasstrang eines Kraftfahrzeugs gemäß den Merkmalen im Oberbegriff von Patentanspruch 1. Solch ein Verdampferrohr ist bekannt aus DE 10201103110.

Die vorliegende Erfindung betrifft weiterhin ein Verfahren zur Herstellung eines Verdampferrohres gemäß den Merkmalen in Patentanspruch 8.

Kraftfahrzeuge werden heutzutage nach wie vor als Hauptenergiequelle mit fossilen Brennstoffen über eine Verbrennungskraftmaschine angetrieben. Da diese jedoch endlich sind, ist es das Bestreben, die Energieentnahmeeffizienz für einen jeden Brennstoff zu maximieren. Dabei ist der reine Verbrennungsvorgang auf den maximalen Wirkungsgrad von 40 % des idealen Carnotprozesses naturgesetzlich beschränkt. Dies bedeutet, dass von den 100 % Energie, die im Kraftstoff enthalten sind, maximal 40 % in Bewegungsenergie umsetzbar sind und die restliche Energie über Wärme abgeführt wird. Hierzu ist es aus dem Stand der Technik jedoch bekannt, die beim Verbrennungsvorgang entstehende Wärme mittels Kraftwärmekopplung zu nutzen. So wird die in der Wärme enthaltende Energie ebenfalls dazu genutzt, weitere Energie zum Betrieb des Kraftfahrzeugs oder Peripheriekomponenten bereit zu stellen.

Aus der WO 2009/157611 A1 ist hierzu eine Herstellungsmethode für einen Wärmetauscher bekannt, bei dem in eine Oberfläche Rillen eingebracht werden, diese mit einem temporären Platzhalter gefüllt werden und im Anschluss daran der Wärmetauscher mit einem Sintermaterial versehen wird, das nach der Zuführung von Wärme eine poröse Struktur beibehält. Ein solches Herstellungsverfahren ist jedoch kostenintensiv, da eine Bearbeitung des Grundkörpers notwendig ist, eine größere Wandstärke benötigt wird und zudem ein beschriebenes Herstellungsverfahren nicht auf ein radiales Design übertragbar ist.

Aufgabe der vorliegenden Erfindung ist es daher, ausgehend vom Stand der Technik ein Verdampferrohr aufzuzeigen, das einen besonders hohen Wirkungsgrad hat und gleichzeitig sehr kostengünstig herstellbar ist. Es ist weiterhin Aufgabe der Erfindung, ein entsprechendes Herstellungsverfahren zu benennen.

Die zuvor genannte Aufgabe wird erfindungsgemäß mit einem Verdampferrohr gemäß den Merkmalen im Patentanspruch 1 gelöst.

Der verfahrenstechnische Teil der Aufgabe wird weiterhin mit einem Herstellungsverfahren gemäß den Merkmalen im Patentanspruch 8 gelöst.

Vorteilhafte Ausführungsvarianten der vorliegenden Erfindung sind Gegenstand der abhängigen Patentansprüche.

Das erfindungsgemäße Verdampferrohr zur Anordnung in einem Abgasstrang eines Kraftfahrzeuges, wobei in dem Verdampferrohr ein Innenrohr zur Durchleitung eines ersten Mediums angeordnet ist und das Innenrohr an seiner Außenmantelfläche von einem Verdampfungskanal umgeben ist, wobei durch den Verdampfungskanal ein zweites Medium leitbar ist, ist erfindungsgemäß dadurch gekennzeichnet, dass in dem Verdampfungskanal in Radialrichtung nach außen auf der Außenmantelfläche des Innenrohres ein grobes Drahtgewebe angeordnet ist, gefolgt von einem gegenüber diesem feineren Drahtgewebe und einer Sinterschicht, wiederum gefolgt von einem optionalen feinen Drahtgewebe und einem optionalen Gehäuserohr. Es hat sich herausgestellt, dass die Verwendung einer Zwischenlage zwischen dem groben und dem feinen Drahtgewebe zur mechanischen Abstützung sinnvoll ist.

Erfindungsgemäß wird durch das Verdampferrohr, insbesondere das Innenrohr, ein erstes Medium, insbesondere in Form eines Abgases, geleitet. Das Abgas stammt von dem Verbrennungsvorgang der Verbrennungskraftmaschine und weist in der Regel eine Temperatur zwischen 400 °C und 1.000 °C, insbesondere zwischen 400 °C und 800 °C auf. Das Abgas strömt durch das Innenrohr, wodurch aufgrund von Konvektion und Wärmeleitung durch die Innenrohrmantelfläche dann ein Wärmestrom an die Außenmantelfläche des Innenrohres strömt. Zwischen der Außenmantelfläche des Innenrohres und einer äußeren Hülle, insbesondere einem äußeren Gehäuserohr, ist wiederum ein zweiter Kanal ausgebildet, durch den ein zweites Medium, insbesondere ein Arbeitsmedium, strömt. Sinn und Zweck des Verdampferrohres ist es, dass das Arbeitsmedium in dem zweiten Kanal verdampft. Hierzu ist in dem zweiten Kanal poröses Material angeordnet, das eine Kapillarstruktur aufweist. Insbesondere ist das Verdampferrohr als Verdampfer für ein Loop-Heat-Pipe ausgebildet.

Das erfindungsgemäße Verdampferrohr zeichnet sich durch eine hohe übertragbare Wärmemenge und eine flexible geometrische Anordnung aus. Die Verdampfungsfunktion selbst funktioniert dabei alleine durch den Wärmeeintrag aus dem Abgas, ohne ein zusätzliches mechanisches Pumpen des Arbeitsmediums. Dies wird durch die Kapillarstruktur selbst in dem zweiten Kanal ermöglicht. Das an einer Wärmesenke kondensierte Arbeitsmedium wird durch die Kapillarstruktur in den Verdampfer zurückgepumpt und einer weiteren Verdampfung zugeführt. Zum Abtransport des dadurch entstandenen Dampfes wiederum leiten diesen die Kanäle in dem groben Drahtgewebe hindurch, so dass der Dampf einem Kondensator zuführbar ist.

Dem Aufbau der Kapillarstruktur selber kommt dabei eine entscheidende Bedeutung zu, da über die Porosität und die Porengeometrie die Kapillarkraft und die Permeabilität selbst einstellbar sind und hierdurch wiederum die Leistung des Verdampferrohres bestimmt wird. Darüber hinaus ist es Ziel, dass der Wärmeübergang von Abgasrohr zu Kapillarstruktur gegenüber aus dem Stand der Technik bekannten Kapillarstrukturen wesentlich verbessert ist. Erfindungsgemäß wird dies dadurch gelöst, dass ein grobes Drahtgewebe, wobei das grobe Drahtgewebe insbesondere eine Dicke von 0,5 mm bis 2 mm, bevorzugt von 0,8 mm bis 1,2 mm und ganz besonders bevorzugt von ca. 1 mm aufweist, und eine Porengröße zwischen 0,1 mm und 0,5 mm, vorzugsweise von 0,2 mm bis 0,4 mm und insbesondere von 0,3 mm aufweist, wobei dies eine geometrische Porengröße ist und das grobe Drahtgewebe direkt auf der Außenmantelfläche des Innenrohres befestigt ist. Ganz besonders bevorzugt ist das grobe Drahtgewebe mit der Außenmantelfläche des Innenrohres stoffschlüssig gekoppelt. Das grobe Drahtgewebe übernimmt dabei die Funktion des axialen Dampftransports derart, dass der Dampf durch die entstandenen Hohlräume des Drahtgewebes entlang der Drähte geleitet wird.

Um einen möglichst hohen Wärmeübergang von Außenmantelfläche des Innenrohres in das grobe Drahtgewebe zu ermöglichen, ist dieses nicht nur besonders bevorzugt stoffschlüssig mit dem Innenrohr gekoppelt, alternativ oder ergänzend weisen 40 % bis 60 %, vorzugsweise 45 % bis 55 % und ganz besonders bevorzugt 50 % der Oberfläche der Außenmantelfläche einen Anlagenkontakt mit dem groben Drahtgewebe auf. Dies kann ganz besonders bevorzugt derart hergestellt sein, dass das Drahtgewebe verpresst ist, so dass sich an den Anlageflächen der Drähte des groben Drahtgewebes Abflachungen der einzelnen Drähte selbst ergeben. Hierdurch wird eine hohe konduktive Erwärmung der Kapillarstruktur durch Wärmeleitung von der Außenmantelfläche des Innenrohres in das grobe Drahtgewebe hinein erzeugt bei gleichzeitig freibleibendem Volumen für die Dampfströmung selber innerhalb des groben Drahtgewebes. Weiterhin wird in dem groben Drahtgewebe im Gegensatz zu aus dem Stand der Technik bekannten Dampfkanälen mit konstantem Querschnitt eine turbulente Dampfströmung erzeugt, die eine stärkere Überhitzung des Dampfes innerhalb des zweiten Kanals begünstigt und hierdurch wiederum die Leistung des Verdampferrohres erhöht.

Im Rahmen der Erfindung ist es auch möglich, zunächst das Drahtgewebe planar, also in ebener Fläche, zu pressen und anschließend um das Rohr zu wickeln. Oben genannte Vorteile bezüglich der Erhöhung der Anlagefläche ergeben sich entsprechend. Auch ist es möglich, zunächst das feine Drahtgewebe mit dem groben Drahtgewebe planar zu verpressen.

Das grobe Drahtgewebe umhüllt dabei in Längsrichtung des Innenrohres dieses zumindest abschnittsweise, wobei das grobe Drahtgewebe selbst wiederum von einem feinen Drahtgewebe umhüllt ist. Das feine Drahtgewebe ist dabei in Relation zu dem groben Drahtgewebe feiner gewählt. Besonders bevorzugt weist das feine Drahtgewebe eine Schichtdicke von 0,05 mm bis 0,3 mm, insbesondere 0,1 mm bis 0,2 mm und ganz besonders bevorzugt von ca. 0,15 mm auf und eine geometrische Porengröße von 20 µm bis 40 µm, insbesondere 25 µm bis 35 µm und ganz besonders bevorzugt von ca. 30 µm.

Das feine Drahtgewebe selbst dient zur formschlüssigen und optionalen stoffschlüssigen Koppelung mit der eigentlichen Kapillarstruktur in Form der Sinterschicht. Durch das feine Drahtgewebe ist es dem Sintermaterial zunächst nicht möglich hindurchzurutschen, so dass Sintermaterial unbeabsichtigter Weise in die grobe Drahtstruktur eindringen kann.

Vorzugsweise ist auch das feine Drahtgewebe wiederum mit dem groben Drahtgewebe stoffschlüssig gekoppelt und/oder verpresst.

In Radialrichtung nach außen auf die Mittellängsachse des Innenrohres bezogen folgt dann auf das feine Drahtgewebe eine Sinterschicht, wobei die Sinterschicht im gesinterten Zustand eine Porosität zwischen 40 % und 80 %, insbesondere zwischen 50 % und 70 % und ganz besonders bevorzugt von mehr als 50 % aufweist. Hierdurch wird ein besonders guter Pumpeffekt des verdampften Arbeitsmediums aufgrund der Kapillarstruktur in der Sinterschicht erzeugt, bei gleichzeitig hinreichender Durchlässigkeit.

Die Dicke der Sinterschicht ist abhängig von dem verwendeten Werkstoff, insbesondere dessen Wärmeleitfähigkeit, bevorzugt zwischen ca. 2 und 12 mm zu wählen. Der Vorteil ist die Minimierung des Druckverlustes bei der Durchströmung des Arbeitsmediums (dünne Schicht), während gleichzeitig die radiale Wärmeleitung das Blasensieden an der Außenseite der Kapillarstruktur begünstigt (dicke Schicht) und daher zu vermeiden ist. Bevorzugt ist eine Dicke von 3 bis 6 mm für die Sinterschicht zu wählen.

Als Ausgangsmaterial für die Sinterschicht kommt ein Metallpulver mit einer durchschnittlichen Partikelgröße von 5 bis 100 µm zum Einsatz. Die Wahl der genauen Partikelgröße ist vom zu verwendenden Arbeitsmedium, insbesondere dessen Benetzungsvermögen, sowie von der geometrischen Anordnung des gesamten Loop Heat Pipe Systems abhängig. Die Verwendung von feinerem Pulver führt unmittelbar zu einer geringeren Porengröße der Sinterschicht und damit zu einem höheren nutzbaren Kapillardruck. Gröberes Pulver und damit eine höhere durchschnittliche Porengröße erhöhen hingegen die Verdampfungsleistung. Bevorzugt wird eine Partikelgröße von rund 20 µm eingesetzt. Zur Erreichung einer hohen Porosität wird eine globulare, bevorzugt jedoch eine spratzige Pulvergeometrie verwendet.

Die Sinterschicht selbst ist wiederum gefolgt von einem feinen Drahtgewebe, so dass es zunächst möglich ist, das Rohr herzustellen. Damit unterschiedliche Temperaturausdehnungen während des Herstellungsprozesses und/oder während des Betriebes des erfindungsgemäßen Verdampferrohres kompensiert werden können, sind alle zuvor genannten Komponenten, mithin das Innenrohr, die Drahtgewebe, die Sinterschicht und ein optional das Verdampferrohr außen begrenzendes Gehäuserohr aus dem gleichen Werkstoff ausgebildet. Dieser ist besonders bevorzugt ein austenitischer oder ferritischer Edelstahl, da dieser gute Resistenzeigenschaften gegen das korrosive Abgas besitzt. Ganz besonders bevorzugt wird ein Edelstahl aus der Gruppe der 1.4XXX-Edelstähle ausgewählt, insbesondere ein Edelstahl der Werkstoffgüte 1.4404.

Damit das Verdampferrohr weiterhin besonders bevorzugt auch unter Kostenaspekten in ein Kraftfahrzeug integriert werden kann, sind zum Anschluss des zweiten Kanals Anschlüsse vorgesehen, die mit dem Verdampferrohr selbst verlötet sind. Die Anschlüsse sind besonders bevorzugt mit dem Innenrohr und/oder dem Gehäuserohr durch einen Lötvorgang gekoppelt. Dies ermöglicht eine kostengünstige Herstellung derart, dass der Lötvorgang beim Wärmeeintrag des Sintervorgangs zeitgleich ausgeführt wird und somit ein separater Verarbeitungsschritt zur Anbindung der Anschlüsse erfindungsgemäß entfällt.

Der verfahrenstechnische Teil zur Herstellung des Verdampferrohres mit mindestens einem der zuvor genannten Merkmale ist weiterhin durch folgende Verfahrensschritte gekennzeichnet:
- Bereitstellen eines Innenrohres,
- Auflegen des groben Drahtgewebes auf das feine Drahtgewebe unter optionaler Eingliederung einer Zwischenlage,
- Auflegen der Drahtgewebe auf die Außenmantelfläche des Innenrohres,
- Bereitstellen eines Ringmantels aus feinem Drahtgewebe und Anordnen des Innenrohres in dem Ringmantel und/oder einem Gehäuserohr,
- Auffüllen des entstehenden Ringspaltes mit Sintermaterial,
- Sintern der Anordnung.

Die Drahtgewebe weisen bevorzugt die zuvor genannten Eigenschaften des Drahtgewebes selber auf. Beim Sintervorgang erfolgt ein Wärmeeintrag derart, dass das Sintermaterial eine Kapillarstruktur mit einer entsprechenden Porosität von bevorzugt mehr als 50 % einnimmt.

Das bevorzugte Temperaturprofil für den Sintervorgang ist hauptsächlich vom verwendeten Werkstoff abhängig. Für einen Edelstahl ist eine Sintertemperatur von 1.100 bis 1150 °C erforderlich, die Sinterdauer liegt bei ca. 30 min (zzgl. Aufheiz- und Abkühldauer). Die lose Pulverschüttung kann vor dem Sintern verpresst werden, bevorzugt jedoch wird diese zur Erreichung einer hohen Porosität ohne vorheriges Pressen gesintert.

In einer bevorzugten Ausführungsvariante des erfindungsgemäßen Verfahrens wird das Drahtgewebe selbst stoffschlüssig mit der Außenmantelfläche gekoppelt, insbesondere durch einen thermischen Fügevorgang. Bevorzugt wird eine Lotpaste auf die Außenmantelfläche des Innenrohrs und/oder auf das grobe Drahtgewebe aufgebracht und bei dem Sintervorgang selber stoffschlüssig gekoppelt. Alternativ kann die stoffschlüssige Verbindung von Drahtgewebe und Rohr mittels Ansintern im Zuge des Sinterprozesses der Kapillarstruktur durchgeführt werden.

Weiterhin besonders bevorzugt werden die Anschlüsse zum Anschluss des zweiten Kanals derart mit dem Verdampferrohr in Kontakt gebracht, dass durch den Sinterprozess, insbesondere durch den Wärmeeintrag des Sinterprozesses, die Anschlüsse mit dem Verdampferrohr verlötet werden.

Im Rahmen der Erfindung ist es weiterhin vorteilig, wenn das grobe Drahtgewebe mit dem feinen Drahtgewebe vor Auflegen auf die Außenmantelfläche des Innenrohrs verpresst wird. Hierdurch wird die jeweilige Anlagefläche erhöht, was wiederum zu einem erhöhten Wärmeübergang führt. Im Rahmen der Erfindung ist es auch möglich, dass das grobe Drahtgewebe auf der Außenmantelfläche des Innenrohres verpresst wird.

Weitere Vorteile, Merkmale, Eigenschaften und Aspekte der vorliegenden Erfindung werden in der nachfolgenden Beschreibung erläutert. Bevorzugte Ausführungsvarianten sind in den schematischen Figuren dargestellt. Diese dienen dem einfachen Verständnis der Erfindung. Es zeigen:
- Figur 1: einen Längsschnitt durch ein erfindungsgemäßes Verdampferrohr und
- Figur 2a und b: einen Querschnitt sowie eine vergrößerte Darstellung einer Querschnittsansicht eines erfindungsgemäßen Verdampferrohrs.

In den Figuren werden für gleiche oder ähnliche Bauteile dieselben Bezugszeichen verwendet, auch wenn eine wiederholte Beschreibung aus Vereinfachungsgründen entfällt.

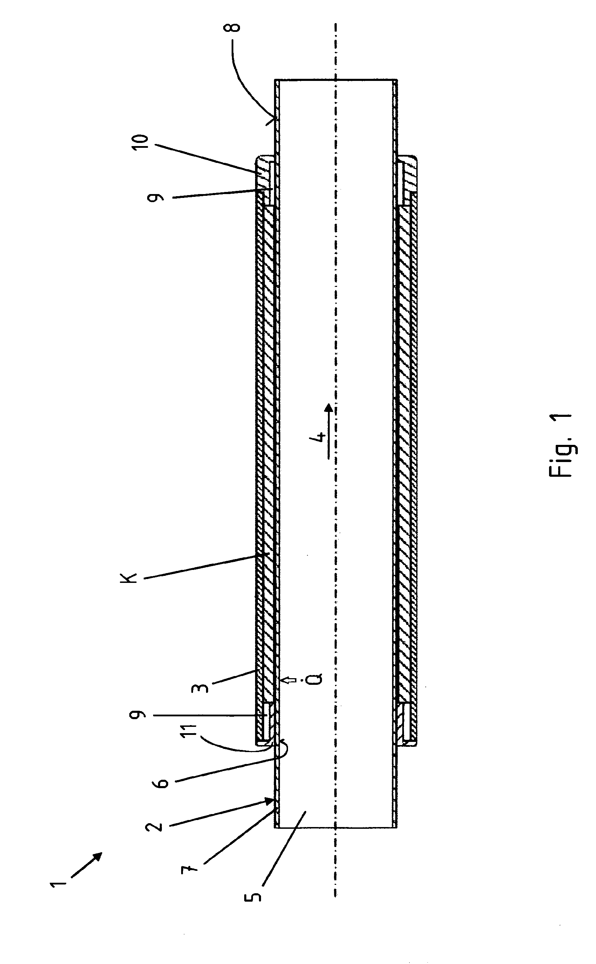

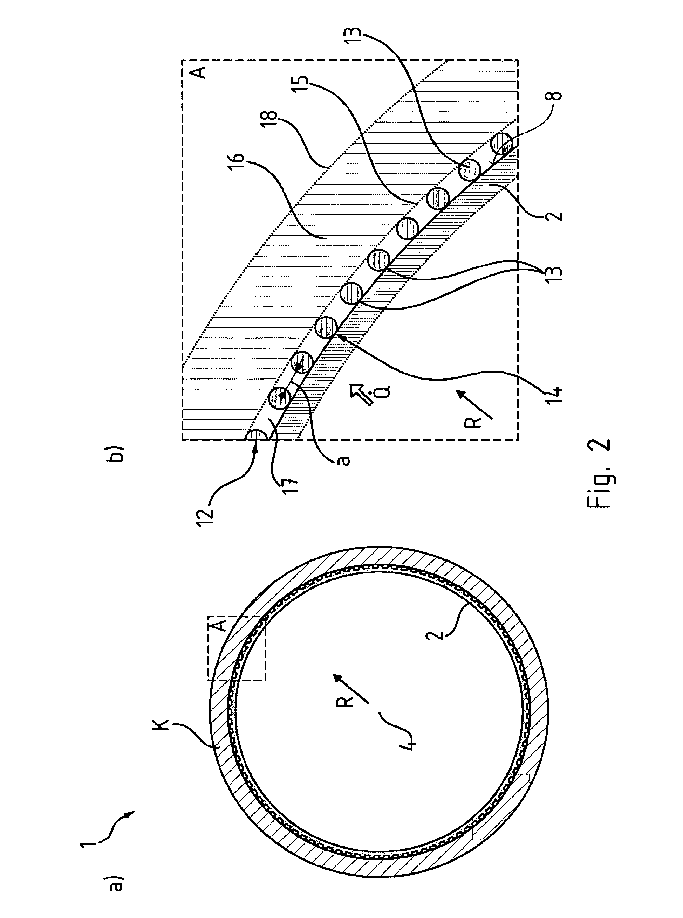

Figur 1 zeigt ein erfindungsgemäßes Verdampferrohr 1, aufweisend ein Innenrohr 2 und ein das Innenrohr 2 auf seine Längsrichtung 4 bezogen zumindest abschnittsweise umhüllendes Gehäuserohr 3. Zwischen dem Gehäuserohr 3 und dem Innenrohr 2 ist eine Kapillarstruktur angeordnet, die in Figur 2a und b im Detail näher erläutert wird. In dem Innenrohr 2 selbst ist ein erster Kanal 5 ausgebildet, durch den ein erstes Medium leitbar ist, so dass das erste Medium an eine Innenmantelfläche 6 des Innenrohrs 2 einen Wärmestrom Q̇ abgibt, der dann durch die Mantelfläche 7 des Innenrohrs 2 hindurchströmt und in die Kapillarstruktur K mittels Wärmeleitung überführt wird. Zwischen der Außenmantelfläche 8 und dem Gehäuserohr 3 selbst ist ein zweiter Kanal 9 in Form eines Verdampfungsrohres ausgebildet, durch den ein zweites Medium strömt, wobei der Verdampfungskanal eine Kapillarstruktur K aufweist. Hierzu sind Verschlüsse 10, 11 jeweils endseitig angesetzt, die den zweiten Kanal 9 abschließen. Die Verschlüsse 10, 11 selber können weitere Anschlüsse aufweisen oder aber als Anschluss selbst ausgebildet sein, um das zweite Medium in den zweiten Kanal 9 einzuleiten.

Figur 2a zeigt eine Querschnittsansicht und Figur 2b eine entsprechende Vergrößerung des Details A. Gut zu erkennen ist das Innenrohr 2, welches auf die Radialrichtung der Mittellängsachse des Innenrohres 2 bezogen nach außen von der Kapillarstruktur K umhüllt ist. Diese ist nochmals besonders gut ersichtlich in Figur 2b in vergrößerter Darstellung gezeigt. Auf der Außenmantelfläche 8 des Innenrohres 2 ist ein grobes Drahtgewebe 12 angeordnet bestehend aus einzelnen Drähten 13, die an einer Unterseite 14 direkt auf der Außenmantelfläche 8 aufliegend flach an diese angedrückt sind. Hierdurch wird sichergestellt, dass ein hinreichend konduktiver Wärmeübergang *Q̇* zwischen Innenrohr und grobem Drahtgewebe 12 stattfindet.

Zwischen den einzelnen Drähten 13 ist ein Abstand a ausgebildet, der die in der zuvorigen Beschreibung benannte geometrische Porengröße darstellt. Weiterhin in Radialrichtung R nach außen folgt auf das grobe Drahtgewebe 12 ein gegenüber diesem feineres Drahtgewebe 15, das wiederum aus einzelnen Drähten besteht, die in einem Abstand zueinander angeordnet sind, wobei jedoch der Drahtdurchmesser gegenüber den Drähten 13 des groben Drahtgewebes 12 und der Abstand gegenüber dem Abstand a des groben Drahtgewebes 12 deutlich kleiner gewählt sind. Hierdurch wird bezweckt, dass eine entsprechende Sinterschicht 16 bzw. Sintermaterial nicht durch die Maschen bzw. Porengröße des feinen Drahtgewebes hindurch dringen kann und somit einzelne Freiräume 17 bzw. Poren in dem groben Drahtgewebe 12 verbleiben, die dann einem zweiten Medium es ermöglichen, mit einer turbulenten Strömung hindurchzuströmen. Aufgrund der Kapillarstruktur in der Sinterschicht wird flüssiges Arbeitsmedium zur weiteren Verdampfung nachgepumpt. Weiterhin auf die Radialrichtung R nach außen bezogen ist ein weiteres feines Drahtgewebe 18 angeordnet, das den Sinterprozess während des Herstellungsverfahrens derart ermöglicht, dass das Sintermaterial nicht nach außen wegbricht. Nicht in Figur 2a und b dargestellt ist das äußere Gehäuserohr 3, das optional mit dem erfindungsgemäßen Verdampferrohr 1 verbunden sein kann.

### Bezugszeichen:

1 - Verdampferrohr
2 - Innenrohr
3 - Gehäuserohr
4 - Längsrichtung zu 2
5 - erster Kanal
6 - Innenmantelfläche zu 2
7 - Mantelfläche zu 2
8 - Außenmantelfläche zu 2
9 - Verdampfungskanal
10 - Verschluss
11 - Verschluss
12 - grobes Drahtgewebe
13 - Draht zu 12
14 - Unterseite zu 13
15 - feines Drahtgewebe
16 - Sinterschicht
17 - Freiraum
18 - feines Drahtgewebe

Q - Wärmestrom
a - Abstand
K - Kapillarstruktur

## Patentansprüche

1. Verdampferrohr (1) zur Anordnung in einem Abgasstrang eines Kraftfahrzeuges, wobei in dem Verdampferrohr (1) ein Innenrohr (2) zur Durchleitung eines ersten Wärmemedium angeordnet ist und das Innenrohr (2) an seiner Außenmantelfläche (8) von einem Verdampfungskanal (9) umgeben ist, wobei durch den Verdampfungskanal ein zweites Medium leitbar ist, **dadurch gekennzeichnet, dass** in dem Verdampfungskanal (9) in Radialrichtung (R) nach außen auf der Außenmantelfläche (8) des Innenrohres (2) ein grobes Drahtgewebe (12) angeordnet ist gefolgt von einem gegenüber diesem feineren Drahtgewebe (15) unter optionaler Eingliederung einer Zwischenlage und einer Sinterschicht (16), wiederum gefolgt von einem optionalen feinen Drahtgewebe (18) und einem Gehäuserohr (3).

2. Verdampferrohr nach Anspruch 1, **dadurch gekennzeichnet, dass** das Innenrohr (2), die Drahtgewebe (12, 15, 18), die Sinterschicht (16) und das Gehäuserohr (3) aus dem gleichen Werkstoff ausgebildet sind, insbesondere aus einem Edelstahlwerkstoff.

3. Verdampferrohr nach Anspruch 1 oder 2, **dadurch gekennzeichnet, dass** das grobe Drahtgewebe (12) eine Schichtdicke von 0,5 mm bis 2 mm, insbesondere von 0,8 mm bis 1,2 mm aufweist und eine Porengröße zwischen 0,1 mm und 0,5 mm, vorzugsweise von 0,2 mm bis 0,4 mm aufweist.

4. Verdampferrohr nach einem der Ansprüche 1 bis 3, **dadurch gekennzeichnet, dass** das grobe Drahtgewebe (12) mit der Außenmantelfläche (8) derart verpresst ist, dass 40 bis 60%, vorzugsweise 45 bis 55% der Außenmantelfläche (8) des Innenrohres (2) im Anlagenkontakt mit dem groben Drahtgewebe (12) sind.

5. Verdampferrohr nach einem der Ansprüche 1 bis 4, **dadurch gekennzeichnet, dass** das feine Drahtgewebe (15, 18) eine Schichtdicke von 0,05 mm bis 0,3 mm, insbesondere 0,1 mm bis 0,2 mm aufweist und eine Porengröße von 20 µm bis 40 µm, insbesondere 25 µm bis 35 µm aufweist.

6. Verdampferrohr nach einem der Ansprüche 1 bis 5, **dadurch gekennzeichnet, dass** die Sinterschicht (16) eine Porosität zwischen 40 und 80%, insbesondere zwischen 50 und 70% aufweist, wobei bevorzugt ein Metallpulver, insbesondere ein Edelstahlpulver mit einer Partikelgröße zwischen 5 und 100 µm, zur Herstellung der Sinterschicht verwendet ist.

7. Verdampferrohr nach einem der Ansprüche 1 bis 6, **dadurch gekennzeichnet, dass** Anschlüsse zur Koppelung des Verdampfungskanals (9) vorgesehen sind, die mit dem Verdampferrohr (1) verlötet sind.

8. Verfahren zur Herstellung eines Verdampferrohres (1) nach mindestens Anspruch 1, **gekennzeichnet, durch** folgende Verfahrensschritte:
• Bereitstellen eines Innenrohres (2),
• Auflegen des groben Drahtgewebes (12) auf das feine Drahtgewebe (15) unter optionaler Eingliederung einer Zwischenlage,
• Auflegen der Drahtgewebe (12, 15) auf die Außenmantelfläche (8) des Innenrohres (2),
• Bereitstellen eines Ringmantels aus feinem Drahtgewebe (18) und Anordnen des Innenrohres (2) in dem Ringmantel und/oder einem Gehäuserohr (3),
• Auffüllen des entstehenden Ringspaltes mit Sintermaterial,
• Sintern der Anordnung.

9. Verfahren nach Anspruch 8, **dadurch gekennzeichnet, dass** das grobe Drahtgewebe (12) mit der Außenmantelfläche (8) stoffschlüssig gekoppelt wird, insbesondere durch ein thermisches Fügeverfahren.

10. Verfahren nach Anspruch 8 oder 9, **dadurch gekennzeichnet, dass** Anschlüsse bei dem Sinterprozess mit dem Verdampferrohr (1) über Verlöten gleichzeitig gekoppelt werden.

11. Verfahren nach einem der Ansprüche 8 bis 10, **dadurch gekennzeichnet, dass** das grobe Drahtgewebe (12) mit dem feinen Drahtgewebe (15) unter optionaler Eingliederung einer Zwischenlage verpresst wird.

## Claims

1. Evaporator pipe (1) for arrangement in an exhaust system of a motor vehicle, an inner pipe (2) for conducting a first heat transfer medium being arranged in the evaporator pipe (1) and the inner pipe (2) being enclosed by an evaporation conduit (9) on its peripheral surface (8), it being possible to conduct a second medium through the evaporation conduit, **characterised in that**, in the evaporation conduit (9), a coarse wire gauze (12) is arranged on the peripheral surface (8) of the inner pipe (2) towards the outside in the radial direction (R), followed by a wire gauze (15) which is finer than said coarse gauze while optionally incorporating an intermediate layer and a sintering layer (16), followed in turn by an optional fine wire gauze (18) and a casing pipe (3).

2. Evaporator pipe according to claim 1, **characterised in that** the inner pipe (2), the wire gauze (12, 15, 18), the sintering layer (16) and the casing pipe (3) are formed of the same material, in particular of a high-grade steel material.

3. Evaporator pipe according to either claim 1 or claim 2, **characterised in that** the coarse wire gauze (12) has a layer thickness of from 0.5 mm to 2 mm, in particular of from 0.8 mm to 1.2 mm, and a pore size of between 0.1 mm and 0.5 mm, preferably of from 0.2 mm to 0.4 mm.

4. Evaporator pipe according to any of claims 1 to 3, **characterised in that** the coarse wire gauze (12) is compressed to the peripheral surface (8) in such a way that from 40 to 60 %, preferably from 45 to 55 %, of the peripheral surface (8) of the inner pipe (2) is in abutting contact with the coarse wire gauze (12).

5. Evaporator pipe according to any of claims 1 to 4, **characterised in that** the fine wire gauze (15, 18) has a layer thickness of from 0.05 mm to 0.3 mm, in particular of from 0.1 mm to 0.2 mm, and a pore size of from 20 µm to 40 µm, in particular of from 25 µm to 35 µm.

6. Evaporator pipe according to any of claims 1 to 5, **characterised in that** the sintering layer (16) has a porosity of between 40 and 80 %, in particular of between 50 and 70 %, a metal powder, in particular a high-grade steel powder having a particle size of between 5 and 100 µm, preferably being used to produce the sintering layer.

7. Evaporator pipe according to any of claims 1 to 6, **characterised in that** connections for coupling the evaporator conduit (9) are provided and are soldered to the evaporator pipe (1).

8. Method for producing an evaporator pipe (1) according to at least claim 1, **characterised by** the following method steps:
• providing an inner pipe (2),
• placing the coarse wire gauze (12) onto the fine wire gauze (15) while optionally incorporating an intermediate layer,
• placing the wire gauze (12, 15) onto the peripheral surface (8) of the inner pipe (2),
• providing an annular shell made of fine wire gauze (18) and arranging the inner pipe (2) in the annular shell and/or in a casing pipe (3),
• filling the resultant annular gap with sintering material,
• sintering the arrangement.

9. Method according to claim 8, **characterised in that** the coarse wire gauze (12) is integrally coupled to the peripheral surface (8), in particular by a thermal joining method.

10. Method according to either claim 8 or claim 9, **characterised in that**, by means of soldering, connections are coupled to the evaporator pipe (1) at the same time during the sintering process.

11. Method according to any of claims 8 to 10, **characterised in that** the coarse wire gauze (12) is compressed to the fine wire gauze (15) while optionally incorporating an intermediate layer.

## Revendications

1. Tube d'évaporateur (1) à aménager dans un boyau de gaz d'échappement d'un véhicule automobile, dans lequel un tube interne (2) pour acheminer un premier agent calorifique est agencé dans le tube d'évaporateur (1) et le tube interne (2) est entouré sur sa surface de chemisage externe (8) par un canal d'évaporation (9), dans lequel on peut acheminer un second agent à travers le canal d'évaporation, **caractérisé en ce que**, dans le canal d'évaporation (9), est aménagé dans la direction radiale (R) vers l'extérieur sur la surface de chemisage externe (8) du tube interne (2) un grillage grossier (12) suivi d'un grillage (15) plus fin par rapport à celui-cien y intercalant éventuellement une couche intermédiaire et une couche frittée (16), elles-mêmes suivies d'un grillage fin éventuel (18) et d'un tube formant boîtier (3).

2. Tube d'évaporateur selon la revendication1, **caractérisé en ce que** le tube interne (2), les grillages (12, 15, 18), la couche frittée (16) et le tube formant boîtier (3) sont constitués du même matériau, en particulier d'un matériau de type acier fin.

3. Tube d'évaporateur selon la revendication 1 ou la revendication 2, **caractérisé en ce que** le grillage grossier (12) présente une épaisseur de couche de 0,5 mm à 2 mm, en particulier de 0,8 mm à 1,2 mm, et une grosseur de pores entre 0,1 mm et 0,5 mm, de préférence de 0,2 mm à 0,4 mm.

4. Tube d'évaporateur selon l'une quelconque des revendications 1 à 3, **caractérisé en ce que** le grillage grossier (12) est comprimé avec la surface de chemisage externe (8) de sorte que 40 à 60 %, de préférence 45 à 55 % de la surface de chemisage externe (8) du tube interne (2) soient en contact d'appui avec le grillage grossier (12).

5. Tube d'évaporateur selon l'une quelconque des revendications 1 à 4, **caractérisé en ce que** les grillages fins (15, 18) présentent une épaisseur de couche de 0,05 mm à 0,3 mm, en particulier de 0,1 mm à 0,2 mm, et une grosseur de pores de 20 µm à 40 µm, en particulier de 25 µm à 35 µm.

6. Tube d'évaporateur selon l'une quelconque des revendications 1 à 5, **caractérisé en ce que** la couche frittée (16) présente une porosité entre 40 et 80 %, en particulier entre 50 et 70 %, dans lequel on utilise de préférence une poudre métallique, en particulier une poudre d'acier fin ayant un calibre particulaire entre 5 à 100 µm pour la fabrication de la couche frittée.

7. Tube d'évaporateur selon l'une quelconque des revendications 1 à 6, **caractérisé en ce que** des raccords sont prévus pour coupler le canal d'évaporation (9), lesquels raccords sont brasés avec le tube d'évaporateur (1).

8. Procédé de fabrication d'un tube d'évaporateur (1) selon au moins la revendication 1, **caractérisé par** les étapes suivantes consistant à :
• préparer un tube interne (2),
• appliquer le grillage grossier (12) sur le grillage fin(15) en intercalant éventuellement une couche intermédiaire,
• appliquer les grillages (12, 15) sur la surface de chemisage externe (8) du tube interne (2),
• préparer une chemise annulaire constituée de grillage fin (18) et aménager le tube interne (2) dans la chemise annulaire et/ou un tube formant boîtier (3),
• remplir l'intervalle annulaire obtenu par un matériau de frittage et
• fritter l'ensemble.

9. Procédé selon la revendication 8, **caractérisé en ce que** le grillage grossier (12) est couplé d'un seul tenant avec la surface de chemisage externe (8), en particulier par un procédé de jonction thermique.

10. Procédé selon la revendication 8 ou la revendication 9, **caractérisé en ce que** des raccords sont couplés simultanément lors du procédé de frittage avec le tube d'évaporateur (1) par brasage.

11. Procédé selon l'une quelconque des revendications 8 à 10, **caractérisé en ce que** le grillage grossier (12) est comprimé avec le grillage fin (15) en intercalant éventuellement une couche intermédiaire.
